# EUROPEAN PATENT APPLICATION

(11) **EP 4 106 037 A1**
(43) Date of publication of application: **21.12.2022**
(21) Application number: 21179716.2
(22) Date of filing: 16.06.2021
(51) Int. Cl.: H01M 4/04, H01M 4/66, H01M 10/052

(54) **METHOD OF PRODUCING AN ELECTRODE, ELECTRODE, DRY COATING COMPOSITION, BATTERY AND ELECTRONIC CIRCUIT**

(71) Applicant: Max-Planck-Gesellschaft zur Förderung der Wissenschaften e.V., 80539 München (DE)
(72) Inventor: HACKNER, Maximilian, 73066 Sparwiesen (DE); SPATZ, Joachim, 70569 Stuttgart (DE); HOTZ, Daniel, 97877 Wertheim (DE)
(74) Representative: Manitz Finsterwald Patent- und Rechtsanwaltspartnerschaft mbB

(57) **Abstract**

The present invention relates to a method of producing an electrode, comprising the following steps: Step (A) of providing a conductive base material, Step (B) of providing a coating composition comprising an electrode active material and optionally a binder, wherein the coating composition is a free-flowing powder, Step (C) of coating the conductive base material provided in step (A) with the coating composition provided in Step (B), and Step (D) of heating the coated conductive base material obtained in step (C) and optionally compressing the coated conductive base material (14), e.g. by calendering. Further, the present invention relates to an electrode, a dry coating composition, a battery and an electric circuit.

## Description

The present invention concerns a method of producing an electrode and to an electrode, a dry coating composition, a battery and an electric circuit.

Ion batteries, such as lithium ion batteries, typically have electrodes produced by dispersing powder active materials in a solvent. The dispersion is doctor bladed on a current collector substrate, typically a metallic foil, and dried afterwards to provide the electrodes. For such a coating process, it is required to utilize solvents that are harmful to health and/or the environment.

Further, for thicker layers of active materials, which is desired for providing thick electrodes, enabling a higher battery energy area density, as described e.g. by Kuang et al. in "Thick Electrode Batteries: Principles, Opportunities, and Challenges", Adv. Energy Mater. 2019, 9, 1901457, applying the active material as a dispersion onto the current collector substrate may cause several disadvantages resulting from the drying process during which the solvent of the dispersion is evaporated. Especially when the drying process is too quick, this may cause the formation of bubbles and poor contact between the current collector substrate and the active material.

In view of the above, there is a need for a method of producing an electrode which solves the above described problems.

The present invention solves these problems by the method according to claim 1, electrode according to claim 10, the coating composition according to claim 12, the battery according to claim 14 and the circuit according to claim 15.

The present invention concerns a method of producing an electrode, comprising the following steps: Step (A) of providing a conductive base material, Step (B) of providing a coating composition comprising an electrode active material and optionally a binder, wherein the coating composition is a free-flowing powder, Step (C) of coating the conductive base material provided in step (A) with the coating composition provided in Step (B), and Step (D) of heating the coated conductive base material obtained in step (C) and optionally compressing the coated conductive base material (14), e.g. by calendering.

The above coating process utilizes a dry coating composition that is a free-flowing powder. It is more efficient in cost and chemical consumption, since no solvent is required for making a dispersion. In principle, these advantages can be realized for all kinds of conductive base materials. The conductive base material can be a current collector substrate. The method of the present invention is in particular suitable for producing three-dimensional (3D) electrodes. The free-flowing powder can easily penetrate into cavities and pores, e.g. of a porous, conductive base material. Since the coating composition is a free-flowing powder, no evaporation of solvents is required, simplifying the manufacturing process.

Together with the three-dimensional fiber network electrode aspect, this describes a method for the production of battery electrodes in different thicknesses. However, the present invention is not limited to three-dimensional fiber networks but can also be realized utilizing other conductive base materials.

In accordance with the present invention, it is preferable that the conductive base material provided in step (A) is a porous conductive base material. Due to using a free-flowing powder as the coating composition, it can easily penetrate into the pores of such a porous conductive base material and allows to manufacture thick electrodes.

In the context of using a porous conductive base material, it is preferable that the pores of the porous conductive base material are in a range from 0.1 to 2000 µm. The range from 0.1 to 2000 µm refers to an average mean pore size. It is more preferably in the range of 0.5 to 1000 µm, more preferably in the range of 1 to 1000 µm, even more preferably in the range of 2 to 500 µm and furthermore preferably in the range of 5 to 500 µm. The average mean pore size can be determined using a micro-computertomograph to reproduce the 3D structure of the porous conductive base material and then evaluate the mean pore diameter using the bubble point method. The bubble point method determines the largest ball diameter, which might fit in a cavity of the porous base material, which is considered the pore size. More in detail, a point is placed at the center of a cavity of the conductive base material, e.g. between two fibers, and the radius of the bubble, with the point as a center is increased, until contact to surfaces of the conductive material adjacent to the cavity, e.g. both fibers, is made. The diameter of the bubble corresponds to the pore size. If at any given parameter the bubble diameter only contacts one surface, e.g. one fiber, the center point is displaced into the direction of the surface, e.g. the fiber, that the bubble did not contact.

It is preferred that a porosity of the conductive base material, in particular when comprising or consisting of a three-dimensional network of metal fibers, is in the range of 95 vol% to 99.5 vol%, in particular in the range of 96 vol% to 99.4 vol%, in particular in the range of 97 vol% to 99.0 vol%. Such high porosity allows the addition of large amounts of active electrode material, reducing the fraction of inactive components and thereby improving battery performance per mass. The porosity can be determined using a micro-computertomograph to reproduce the fiber structure and then evaluate the porosity using the bubble point method described herein.

The conductive base material is not particularly limited. The present invention can be realized on many different conductive base materials. Certain advantages can be particularly realized when the conductive base material has a three-dimensional structure, e.g. in the form of a fabric, non-woven or network of fibers. The fibers should have a sufficient electric conductivity, such as carbon-nanotubes or graphite fibers or metal fibers. The conductivity of the conductive base material should preferably be 10⁵ S/m or higher. The upper limit is not particularly restricted. It is determined by the material and structure of the conductive base material.

In accordance with the present invention it is preferable that the conductive base material provided in step (A) comprises a plurality of metal fibers, forming a network of metal fibers. These metal fibers provide a porous structure to the conductive base material, the pores of which can be easily filled with the free-flowing powdery coating composition in step (C). The metal fibers provide a high electric conductivity and provide a high surface onto which the active electrode material can be deposited. Thereby, the mass of the base material relative to the mass of active material can be kept low, allowing for a high energy density.

It is preferable that in the conductive base material provided in step (A) the metal fibers forming the network are in direct contact with one another. This improves conductivity throughout the conductive base material even when its thickness is very high.

Preferably, the conductive base material, especially when having a three-dimensional structure, provided in step (A) has a thickness of 200 µm or greater, more preferably of 500 µm or greater, furthermore preferably of 550 µm or greater, even more preferably of 600 µm or greater and even furthermore preferably of 750 µm or greater, even further more preferably 1000 µm or greater, even further more preferably 1500 µm or greater, even further more preferably 3000 µm or greater and most preferably 5000 µm or greater.. The thickness of the conductive base material is not particularly limited, especially when having a three-dimensional structure. It may be 10 mm or less, preferably 8 mm or less, furthermore preferably 5 mm or less and even more preferably 3 mm or less.

The points of contact between such metal fibers constituting the conductive base material provided in step (A) can vary in a broad range. Preferably, the density of the points of contact is in a range of 1 mm⁻³ to 5000 mm⁻³. More preferably, the density of the points of contact is in a range of 3 mm⁻³ to 2000 mm⁻³, even more preferably in a range of 5 mm⁻³ to 500 mm⁻³. The density of points of contacts can also be regarded as a crosslinking density between the fibers, especially when the metal fibers are fixed to one another at the points of contact, i.e. when the metal fibers are directly fixed to one another and are in electric contact with one another at the points of contact. With a point of contact density of 1 mm⁻³ or higher, in particular 5 mm⁻³ or higher, homogenous distribution of the potential is realized, avoiding detrimental effects, such as high overpotential or creation of local hot areas due to a high resistance. In turn, density of points of contacts of 5000 mm⁻³ or lower, in particular of 2000 mm⁻³ or lower, more particular of 500 mm⁻³ or lower is useful for providing flexibility to the three-dimensional network of metal fibers forming the conductive base material, so that even rather thick three-dimensional networks, i.e. with a thickness of 200 µm or greater, of 500 µm or greater, or of 550 µm or greater, or of 600 µm or greater or of 750 µm or greater, can be deformed, e.g. rolled, without causing the network to break.

It is also preferable that the volume fraction of metal fibers in the conductive base material, in particular a three-dimensional network of metal fibers, is equal to or greater than 0.075 vol%, in particular equal to or greater than 1.3 vol%, in particular 2.0 vol% or greater. Networks with lower volume fractions may have difficulties to homogenously distribute the local potential, in turn this might result in formation of hot spots and high overpotentials. Accordingly, with the volume fraction of the metal fibers in the three-dimensional network of metal fibers as specified above, battery life can be increased. The volume fraction of metal fibers in the tree-dimensional network of metal fibers can be determined using a micro-computertomograph to reproduce the fiber structure and then evaluate the fraction using the bubble point method described herein.

It is particularly preferred that the conductive base material provided in step (A), in particular on that comprises or consists of a three-dimensional network of metal fibers, has a conductivity of equal to or greater than 1×10⁵ S/m, in particular equal to or greater than 5×10⁵ S/m, in particular equal to or greater than 1×10⁶ S/m, a porosity in the range of 95 vol% to 99.5 vol%, in particular in the range of 96 vol% to 99.4 vol%, in particular in the range of 97 vol% to 99.0 vol%, and a volume fraction of metal fibers in the three-dimensional network of metal fibers of equal to or greater than 0.075 vol%, in particular equal to or greater than 1.3 vol%, in particular 2.0 vol% or greater.

Preferably, in the conductive base material the fibers, in particular the metal fibers, are in direct electrical contact with one another such that the electrical conductivity can be enhanced to a maximum. In this regard it is particularly preferable that all of the metal fibers are sintered to other metal fibers, most preferable directly to other metal fibers, without the need of an additional binder, e.g. a polymeric binder or solder. It is therefore further preferred that the metal fibers are fixed to one another without a polymeric binder, since such polymeric binders often have a poor electrical conductivity and high temperature performance.

It may be preferable that the metal fibers contain at least one of copper, silver, gold, nickel, palladium, platinum, cobalt, iron, chromium, vanadium, titanium, aluminum, silicon, lithium, manganese, boron, combinations of the foregoing and alloys containing one or more of the foregoing, such as CuSn8, CuSi4, AlSi1, Ni, stainless steel, Cu, Al or vitrovac alloys. Vitrovac alloys are Fe-based and Co-based amorphous alloys. It may particularly be preferred if the metal fibers are made of copper or of aluminum or of a stainless steel alloy. Different types of metal fibers can be combined with each other, so that the conductive base material can contain for example metal fibers made of copper, one or more stainless steel alloys and/or aluminum. Networks being made out of metal fibers, wherein the metal fibers are of copper, aluminum, cobalt, stainless steel alloys containing copper, aluminum, silicon and/or cobalt, are particularly preferred.

The fibers can be sintered to one another, as described for example in WO 2020/016240 A1.

In accordance with the present invention, it is preferable that the metal fibers of the conductive base material provided in step (A), before fixing them one to another, show an exothermic event when heated in a DSC measurement, wherein the exothermic event releases energy in an amount of 0.1 kJ/g or more, more preferably in an amount of 0.5 kJ/g or more, even more preferably in an amount of 1.0 kJ/g or more and most preferably in an amount of 1.5 kJ/g or more. The absolute amounts depend very much on the used metal or metal alloy. The extent of the exothermic event can be determined by comparing DSC measurements of the metal fibers before and after thermal equilibration. In other words, the metal fibers showing such an exothermic event are not in their thermodynamic equilibrium at ambient temperatures. During heating in a DSC measurement, the metal fibers can transit from a metastable to a thermodynamically more stable condition, e.g. by crystallization, recrystallization or other relaxation processes reducing defects in the lattice of metal atoms. An exothermic event observed for the metal fibers when being heated, e.g. during a DSC measurement, indicates that the metal fibers are not in their thermodynamic equilibrium, e.g. the metal fibers can be in an amorphous or nanocrystalline state containing defective energy and/or crystallization energy which is released during heating of the metal fibers due to occurrence of crystallization or recrystallization. Such events can be recognized e.g. using a DSC measurement. It was found that networks of metal fibers which show such an exothermic event have an improved strength after the metal fibers are fixed to one another.

Optionally, the metal fibers of the conductive base material comprise a non-round cross section, in particular a rectangular, quadratic, partial circular or an elliptical cross section with a large axis and a small axis. Such cross-sections usually lead to fibers which are not in their thermal equilibrium, i. e. in a metastable state, which, for some applications, may be beneficial. The non-round cross sections further increase the surface area per mass of metal fiber and thereby also contribute to the performance of the electrode per mass.

In this connection it is noted that, obviously, the value of the small axis must be smaller than the value of the large axis. In the case in which the small axis comprises a higher value, i.e. a greater length, than the large axis, the definition of "small" and "large" must simply be interchanged.

It may be preferred that a ratio of the small axis to the large axis lies in the range of 1 to 0.05, preferably in the range of 0.7 to 0.1, in particular in the range of 0.5 to 0.1. As it is generally known, the ratio between the lengths of the small and the large axis of an ellipse is higher the more the ellipse looks like a circle, for which the ratio would be 1. The smaller the value of the ratio is, the flatter is the ellipse. Thus, the ratio of the small axis to the large axis is in particular less than 1.

Alternatively, it is also possible that the metal fibers may comprise a round cross-section. For such a cross-section a ratio of a "large" axis to a "small" axis would obviously be exactly 1. Round cross-sections comprise an energetically more preferred state the cross-sections comprising an aspect ratio that is smaller than 1. Hence, fibers with round cross-sections are energetically closer to their equilibrium state than fibers with cross-sections of other shapes.

Preferably, the metal fibers of the conductive base material are obtainable by subjecting a molten material of the metal fibers to a cooling rate of 10² K min⁻¹ or higher, in particular by vertical or horizontal melt spinning. Such metal fibers produced by melt spinning can contain spatially confined domains in a high-energy state (i. e. in a metastable state), due to the fast cooling applied during the melt spinning process. Fast cooling in this regard refers to a cooling rate of 10² K·min⁻¹ or higher, preferably of 10⁴ K·min⁻¹ or higher, more preferably to a cooling rate of 10⁵ K·min⁻¹ or higher. Accordingly, it is preferable that step (A) of providing the conductive base material comprises the manufacturing of metal fibers, as mentioned before, and the formation of a network of metal fibers.

Also, for the conductive base material provided in step (A), fibers obtained by melt spinning often comprise a rectangular or semi-elliptical cross section, which are preferred for certain application fields since they are far away from their equilibrium state. Examples for melt spinners with which such fibers can be produced are for example known from the not yet published international application PCT/EP2020/063026 and from published applications WO2016/020493 A1 and WO2017/042155 A1, which are hereby incorporated by reference.

According to another example, at least some of the metal fibers of the plurality of metal fibers are amorphous or at least some of the metal fibers of the plurality of metal fibers are nanocrystalline. Nanocrystalline metal fibers contain crystalline domains. Upon heating to a temperature of about 20-60% of the melting temperature of the nanocrystalline metal fibers, these domains undergo recrystallization resulting in an increase of the average size of crystalline domains compared to the average size of the initial crystalline domains in the nanocrystalline metal fibers before heating. It is also possible to mix non-equilibrated (e.g. nanocrystalline or amorphous fibers) with equilibrated (e.g. annealed) fibers.

It may be preferable that the metal fibers preferably contained in the conductive base material provided in step (A) comprise a length of 1.0 mm or more and/or a width of 100 µm or less and/or a thickness of 50 µm or less. With the metal fibers having such dimensions, it is possible to produce a network with metal fibers that are fixed to one another, without needing to heat the metal fibers for a time of more than 30 minutes to temperatures close to their melting point. Conventional connecting techniques, e.g. sintering or welding or mixed techniques, require temperatures close or even slightly above the melting temperature of the metal to be maintained for a relatively long period of time. This can result in melting or at least softening the material of the metal fibers to a certain degree, so that the metal fibers form a metal foil rather than a network, in particular when relatively high pressure is applied during sintering. Since the network of metal fibers is not a metal foil, i.e. the structure of the metal fibers used for producing the network of metal fibers can still be recognized in the network of metal fibers. Accordingly, in a cross-sectional view of network of metal fibers, there are voids which are not part of the metal fibers but are in between the metal fibers of the network fibers.

It is also preferable if the metal fibers have a width of 80 µm or less, more preferable of 70 µm or less, even more preferable of 40 µm or less and most preferably of 10 µm or less. In addition, it is preferable that the metal fibers have a thickness of 50 µm or less, more preferably of 30 µm or less, even more preferably of 10 µm or less and most preferably of 5 µm or less.

Regarding step (A), it is preferable to provide the conductive base material onto a support, in particular when the conductive base material has a porous structure, as described above. The support prevents the free-flowing powder from flowing through the conductive base material, so that pores or cavities thereof can be filled with the coating composition. The support is not particularly limited. Preferably, the support is a non-stick support so that it can be easily removed after carrying out step (D). Further, the support should be thermally stable under the conditions of step (D). Thermally stable in this context means that the support does not melt or decompose when carrying out step (D). In other words, the support does not stick to the conductive base material and electrode active material after carrying out step (D). It may for example be siliconized paper, a polymer sheet, a metal foil or a non-woven or woven sheet of fibers, e.g. natural fibers.

In accordance with the present invention, it is preferable that in step (B) of providing a coating composition the electrode active material, optionally a polymeric binder and, optionally a conductivity enhancing additive, e.g. carbon black, are mixed to obtain the coating composition as a free-flowing powder. The coating composition may comprise the electrode active material, a polymeric binder and a conductivity enhancing additive, e.g. carbon black.

It is in particular preferred that the coating composition provided in step (B) has a particle size smaller than the average mean pore size described above for the porous conductive base material provided in step (A). The particle size is in a range of preferably 80% or less, more preferably 50% or less, even more preferably 30% or less, or most preferably of 20% or less compared to the average mean pore size. Particle sizes of the free-flowing coating composition can be determined by commonly applied methods, such as laser diffraction or sifting.

The coating composition provided in step (B) preferably comprises as the binder a polymeric binder. The polymeric binder is not particularly limited, it may be a fluorine containing polymer, carboxymethylcellulose, or a rubber, such as styrene-butadiene-rubber. The binder, in particular the polymeric binder, can be preferably included in an amount of 0 to 30 % by weight of the coating composition, more preferably in an amount of 0.5 to 20 % by weight of the coating composition, further more preferably in an amount of 1 to 15 % by weight of the coating composition, even more preferably in an amount of 1.5 to 7 % by weight. Such fluorine containing polymer binders can provide good adhesion of the electrode active material to the conductive base material while at the same time having excellent electrochemical stability. Suitable examples of fluorine containing polymer binders are poly(vinylidene fluoride) (PVDF) and poly(tetrafluoroethylene) (PTFE), however, also other polymeric binders can be used. It is also possible to use derivatives of PVDF, such as PVDF-HFP (poly(vinylidene fluoride-co-hexafluoropropylene)) or derivatives of PTFE. However, it is also possible to realize the present invention without binder or with another binder. By avoiding the use of solvents, a risk of degradation of the binder is reduced, thereby making it possible to use a lot of different types of polymer as binder. In this context, the polymeric binder is preferably thermoplastic.

Preferably, a glass transition temperature and/or a melting temperature, in particular a melting temperature, of the polymeric binder is above 30 °C, more preferably above 50 °C, even more preferably above 70 °C. With the glass transition temperature an/or melting temperature being above said temperature, the polymeric binder is non-sticky at room temperature and allows thereby the provision of a free-flowing powder in step (B), even without utilizing anticaking agents. The glass transition temperature (Tg) and melting temperature (Tm) of the polymeric binder can be measured using differential scanning calorimetry (DSC). During operation, a secondary battery, e.g. a lithium ion battery, may heat up. With the glass transition temperature and/or melting temperature in the above range, extensive softening and flowing of the binder during battery operation can be prevented. This in turn allows for a longer lifetime of the corresponding battery.

In step (B) of the method according to the present invention, it is preferable that an electrode active material is provided which is capable of intercalating mono- or multivalent ions, in particular lithium ions.

Preferably, in step (B) of the method according to the present invention, the coating composition is provided by mixing its components such that the electrode active material constitutes up to 100 % by weight of the coating composition, more preferably up to 99 % by weight of the coating composition, more preferably 70 to 99% by weight, even more preferably 80 to 98% by weight, most preferably 80 to 95% by weight. By using a porous conductive base material, in particular a network of metal fibers, it is possible to use very high amounts of electrode active material, since the use of binder and conductivity enhancing additives can be reduced to a minimum. Accordingly, when a porous conductive base material is used, the coating composition is provided by mixing its components such that the electrode active material constitutes preferably 80 to 100 % by weight of the coating composition, more preferably 90 to 100 % by weight of the coating composition, even more preferably 95 to 100 % by weight of the coating composition, furthermore preferably 98 to 100 % by weight of the coating composition, even further more preferably 99 to 100 % by weight of the coating composition, most preferably 100 % by weight of the coating composition. Particularly preferred ranges are also 95 to 98% by weight of the coating composition.

According to one preferred embodiment, the electrode active material is at least one selected from the group consisting of graphite, graphene, silicon, silicon-carbide (SiC) and tin-oxide (SnO), tin-dioxide (SnO2) and lithium-titanoxide (LTO), or mixtures thereof. In another embodiment, the electrode material is a mixture of graphite with at least one selected from the group consisting of graphene, silicon, silicon-carbide (SiC) and tin-oxide (SnO), tin-dioxide (SnO2) and lithium-titanoxide (LTO), in particular a mixture of graphite and silicon and/or silicon carbide. This is in particular preferred when the electrode manufactured with the method of the present invention is utilized as an anode of a mono- or multivalent ion battery, in particular of a lithium ion battery.

According to another preferred embodiment, the electrode active material is at least one selected from the group consisting of lithium-nickel-manganese-cobalt-oxide (NMC), lithium-nickel-manganese-oxide (NMO), lithium-nickel-cobalt-aluminium-oxide (NCA), lithium-cobalt-oxide (LiCoO2) and lithium-iron-phosphate (LFP). This is in particular preferred when the electrode manufactured with the method of the present invention is utilized as a cathode of a mono- or multivalent ion battery, in particular of a lithium ion battery.

Regardless whether the electrode manufactured according to the present invention is intended to be utilized as a cathode or an anode of a battery, as indicated above, it is preferable that the electrode active material comprises graphite being thermally pretreated, i.e. calcined. It was found that thermal treatment of the graphite makes the graphite free-flowing, i.e. non-sticky. For example, thermal treatment can be carried out by heating to 1000 °C or higher under a protective gas atmosphere, e.g. argon, or in vacuum. Without being bound by a theory, it is assumed that the thermal pretreatment reduces the number of surface hydroxide groups and thus the affinity for water. This in turn improves the free-flowing behavior of the graphite. When the electrode being manufactured is intended for an anode, the graphite can be the majority of the or the entire electrode active material and can constitute up to 100 % by weight of the coating composition. Alternatively, it can be used along with another suitable anode active electrode material, e.g. such as those indicated above. When the electrode being manufactured is intended for a cathode, the graphite is preferably present in an amount of up to 20 % by weight of the coating composition, more preferably up 10 % by weight of the coating composition and even more preferably up to 5 % by weight of the coating composition. There is not a particular limit for using a minimum amount of graphite in a cathode electrode active material, however, to obtain a certain improvement of free-flowing behavior of the coating composition it may be preferable to utilize at least 0.5 % by weight of the coating composition, more preferably at least 1.0 % by weight of the coating composition.

It is also preferred that in step (B) of the method according to the present invention when providing the coating composition, a conductivity enhancing additive, e.g. carbon black, is included therein, more preferably a conductive carbon black. Such a carbon black can reduce the internal resistance of the final electrode. An example for such conductive carbon black is available as Super-P carbon black. In the method of the present invention, the amount of such conductive carbon black is usually lower than 10 % by weight of the coating composition, more preferably lower than 8 % by weight of the coating composition, even more preferably lower than 6 % by weight of the coating composition. To have a well-expressed effect of the conductivity enhancing additive, e.g. carbon black, it is preferably to include it in an amount of at least 0.2 % by weight of the coating composition, more preferably in an amount of at least 0.5 % by weight of the coating composition and even more preferably in an amount of at least 1.0 % by weight of the coating composition.

In the method of the present invention, the step (B) of mixing the components of the coating composition is not particularly limited and can be realized by different mixing operations, such as mixing by stirring, shaking, grinding, e.g. in a mortar, milling, e.g. ball milling, and the like. The mixing in step (B) is finished, when the components are mixed homogenously. In case the electrode active material comprises or consists of graphite, it is preferable to mix the graphite and optionally other components by milling, in particular by ball milling, to activate the graphite. According to the present invention, in step

In the method according to the present invention, the coating composition provided in step (B) is dry, i.e. it is essentially free of water and other solvents. Thereby, the coating composition can be provided as free-flowing powder. It can easily be distributed onto the conductive base material and enter into structures provided thereon, e.g. pores or other cavities. Further, no evaporation of water or other solvents is required.

Step (C) of the method according to the present invention preferably comprises filling pores or cavities of the conductive base material provided in step (A) with the free-flowing coating material.

Such a filing of pores or cavities can be achieved by different methods. As an example, the free-flowing powder can be strayed onto/into the conductive base material. As another example, the coating composition can be sprayed onto/into the conductive base material, using a conventional sprayer or an electrostatic sprayer.

For improving the filling of pores and cavities, it may be preferable that in step (C) of the method according to the present invention the conductive base material is subjected to a movement during or after coating it with the coating composition provided in step (B). Such movement can be a shaking, vibrating, rattling, swinging, and the like. Vibration may be realized in step (C) for example by ultrasonic treatment.

Especially when using a porous conductive base material, it is preferred that the coating in step (C) fills the pores and/or cavities of the conductive base material. Before subjecting the coated base material to step (D), it is further preferred to remove supernatant coating composition, i.e. a coating composition not flown into the pores and/or cavities. The removal can be realized by skimming e.g. by using a doctor blade or the like. The skimming can also contribute to improve the filling of the pores and/or cavities. Accordingly, the thickness of the coated conductive base material will be essentially the same compared to the uncoated conductive base material.

In the method of the present invention, it is preferable that in step (D) the conductive base material coated with the coating composition as obtained after step (C) is subjected to a compression. By such a compression, the process time can be further reduced. Besides the economic advantages, the compression reduces also the risk of a spreading out of the binder over the surface of the electrode active material and optional additives. In addition, it is possible to control the residual porosity of the final electrode by the compression.

It is particularly preferred to apply in step (D) a compression in the range of 10 to 70 % of the thickness of the coated conductive base material obtained after step (C). The degree of compression may be chosen to adjust the desired residual porosity of the final electrode.

It is preferable that in step (D) of the method of the present invention, the temperature applied by heating is set to be above the Tg of the binder, in particular the polymeric binder. Especially when applying a compression in step (D), it is preferred that the applied temperature is also the Tm of the binder, in particular the polymeric binder. Preferably, the applied temperature is between Tg and Tm of the binder, especially when a compression is applied in step (D). It is preferably in the range of 1 °C to 50 °C, more preferably in the range of 2 °C to 30 °C, even more preferably in the range of 3 °C to 20 °C, below the Tm of the binder. For example, PVDF is a suitable polymeric binder having a Tm of 177 °C. Accordingly, it is preferred that in the heating in step (D) heating is applied to provide a temperature in the range of 127 °C to 176 °C, more preferred a temperature in the range of 147 °C to 175 °C, even more preferred a temperature in the range of 157 °C to 174 °C. It is in general preferred to have the temperature applied in step (D) close to the Tm of the binder. In this context, temperatures of 50 °C, 30 °C or 20 °C up to less than the Tm of the binder are in particular preferred. With the temperature being close to the Tm of the binder, the binder is activated and binds the components of the coating composition to together and to the conductive base material. Temperatures being closer to the Tm of the binder are more preferred, since they allow shorter process times for step (D) and thereby providing economic advantages. When the temperature applied in step (D) is above Tm, the binder melts. This may cause the binder to be spread out over the surface area of the electrode active material and optionally included additives, such as carbon black. Thereby, the binding effect may not be sufficiently achieved and the electrode performance may deteriorate, due to covering the electrode active material with a film of the binder. Accordingly, it is preferable that the applied temperature is at least 1 °C, at least 2 °C or at least 3 °C lower than the Tm of the binder. A certain difference between the Tm and the applied temperature provides more stability to the process and reduces the risk of accidental overheating, i.e. heating above Tm. Some materials only have a Tg but no Tm. For other materials, the Tm is above the degradation temperature (Tz). In any case, it is preferable to have the temperature applied in step (D) below Tz. Tz as indicated herein refers to the degradation onset temperature as determined by thermogravimetric analysis (TGA) under an atmosphere of protective gas. Accordingly, it is also preferable to have the applied temperature between Tg and Tz of the binder, preferably at least 10 °C above the Tg, more preferably at least 20 °C above the Tg and even more preferably at least 30 °C above the Tg but still below the Tz.

Heating and compressing can be carried out after another. Alternatively, and more preferably, heating and compressing in step (D) of the method of the present invention are carried out simultaneously, i.e. the hot and coated conductive base material is subjected to the compression. This can be achieved by hot pressing or by calendering the coated conductive base material with a heated calendar. The hot press or the calendar rolls are heated to the applied temperature. Heat is transferred by contact of the hot press or calendar rolls with the coated base material, either direct contact or via a support, such as the one mentioned above.

It is possible to carry out step (D) of the method of the present invention by using different heating devices. Suitable heating devices are induction furnaces, infrared furnaces, high temperature ceramic heating elements and/or zone furnaces such as, for example, conveyor furnaces. The heating device may suitably be a continuous furnace or a batch furnace.

Heating in step (D) can also be carried out without compression, i.e. by heating the coated conductive base material using a heating device as indicated above. In such a case it is possible to apply also temperatures above the Tm of the binder. In such a case, the applied temperature is preferably set to be 50 °C, more preferably 30 °C, even more preferably 20 °C below the Tm of the binder and preferably at most 20 °C, more preferably at most 10 °C, even more preferably at most 5 °C above the Tm of the binder. Due the absence of external pressure, treatment time is longer compared to the situation when step (D) includes the application of such a pressure. While the compression free process allows a good control over the process, overall stability of the final electrode as observed to be higher when some compression is applied.

Further, the present application concerns an electrode, comprising a conductive base material being dry coated with a coating composition comprising an electrode active material and a polymeric binder. The dry coating of the conductive base material allows its production without the necessity of evaporating a solvent. In turn, no evaporation channels or bubbles are included, allowing for a higher volumetric density of the electrode active material. Dispersion coated electrodes have structures determined by the evaporation of a solvent, e.g. evaporation channels and bubbles and the like. Such structures are absent in an electrode obtained from the method described herein which utilizes a dry coating.

Preferably, the electrode of the present invention is obtainable by the method of producing an electrode, as described above and in the claims.

In addition, the present invention concerns a dry coating composition, comprising a conductive base material an electrode active material and a polymeric binder, wherein the dry coating is a free-flowing powder. Since the coating composition is a dry coating composition, it is essentially free of water and solvents.

In contrast to other dry coating compositions, the amount of conductivity enhancing additives, such as silver wires, carbon nanotubes, conductive carbon black or electric conductive binder, for cathodes also graphite may be included for conductivity enhancement, can be kept to a minimum or can even be avoided entirely. In this context, the content of conductivity enhancing additives is preferably equal to or less than 10 % by weight, further preferably equal to or less than 8 % by weight and even more preferably equal to or less than 6 % by weight, based on the total weight of the dry coating composition.

The dry coating composition of the present invention is preferably free of electrically conductive polymeric binders, carbon nanotubes and silver nanowires, i.e. the combined amount thereof is preferably equal to or less than 0.1 % by weight. Such electrically conductive polymeric binders are rather expensive and not required when the dry coating composition is used in combination with a porous conductive base material, as described above.

Further, the present invention concerns a battery comprising the electrode according to the present invention.

It is to be understood that the details described above for the conductive base material and the coating composition in the context of the method of the present invention apply correspondingly to the electrode and the coating composition of the present invention.

The invention will now be described in further detail and by way of example only with reference to the accompanying drawings and pictures as well as by various examples of the network and method of the invention. In the drawings there are shown:
- Fig. 1:: an exemplary schematic illustration of the process according to the invention;
- Fig. 2:: Graph showing capacity vs. voltage of the electrode of Example 1 and of Comparative Example 1;
- Fig. 3:: Graph showing cycling behavior of the electrode of Example 1 and of Comparative Example 1;
- Fig. 4:: Scanning electrode microscopy image of the electrode according to Example 1; and
- Fig. 5:: Scanning electrode microscopy image of the electrode according to Example 5.

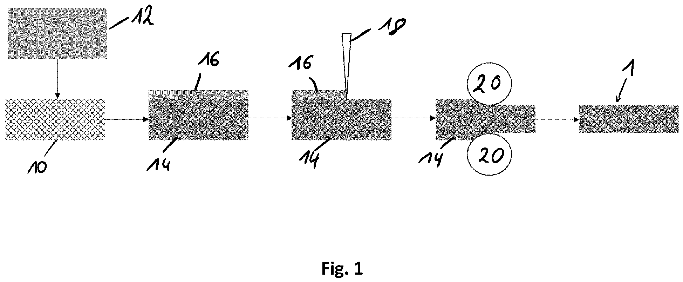

Fig. 1 shows schematically the preparation of an electrode 1 by the method of the present invention. At the beginning, a conductive base material 10 having a three-dimensional structure is provided in step (A). In Fig. 1 a cross-sectional view of the conductive base material is shown, wherein black lines illustrate a network of fibers. These fibers can be metal fibers, carbon fibers or carbon nanotubes, which provide high electrical conductivity. A coating composition 12 is provided in step (B), comprising the electrode active material and a binder, as well as optional additives such as graphite if not the electrode active material and carbon black. The conductive base material 10 is coated with the coating composition in step (C), to provide a coated conductive base material 14, having some of the coating composition as supernatant 16 on its surface. To improve filling of the pores of the conductive base material 10, it can be subjected to movement, such as vibration during the filling with the coating composition 12. The supernatant 16 is removed by using a doctor blade 18. Subsequently, the coated conductive base material 14 is subjected to hot calendaring between two hot calendar rolls 20, whereby the conductive base material is heated and compressed in a single step, to provide the manufactured electrode. This corresponds to step (D) of the present invention.

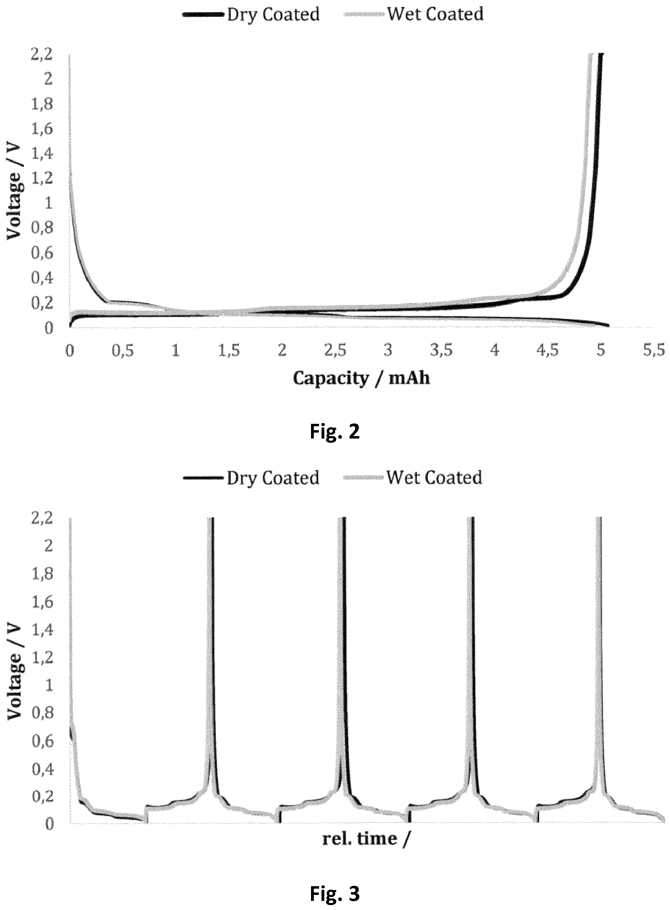

Fig. 2 shows voltage vs. capacity of two electrodes. One electrode was manufactured using the dry coating method according to the present invention, as further described below as Example 1. The data corresponding to the electrode according to the present invention is indicated by the black lines. Further, another electrode (Comparative Example 1) was manufactured, using the same conductive base material and the coating composition differing only in being applied in the form of a slurry, being applied in a conventional manner using a dispersion technique followed by subsequent evaporation. The electrode corresponds to Comparative Example 1. The data corresponding to the electrode according to Comparative Example 1 is indicated by the gray lines. In Fig. 3, the cyclic behavior of the electrodes of Fig. 2 are shown. As can be readily recognized, the performance behavior is similar.

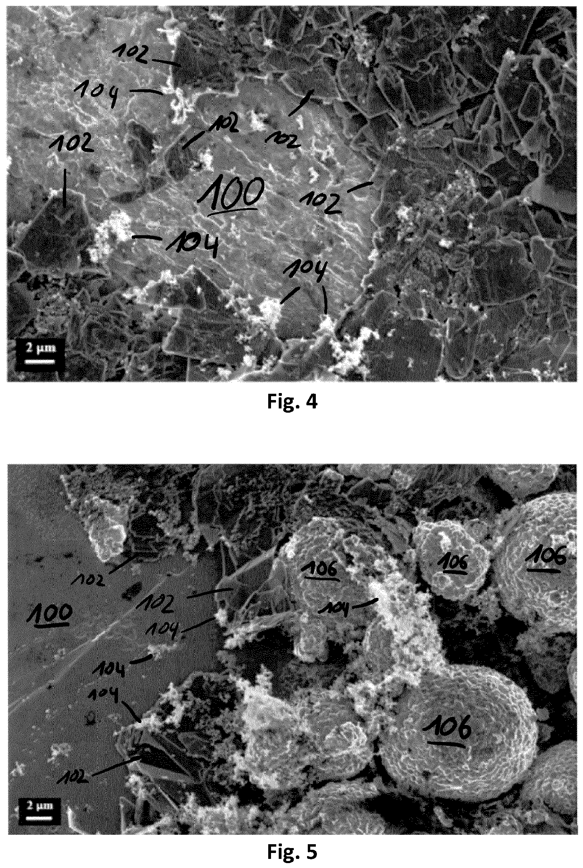

Fig. 4 shows a scanning electrode microscopy of the electrode of Example 1; the conductive base material thereof consists of copper fibers, in particular CuSi3-fibers, containing 3% by weight silicon, being sintered to one another to form a conductive network. In the micrographic image the metal fiber 100 can be recognized as the grey area in the middle. The graphite particles 102 appear as dark plates and the binder 104 can be recognized as white flakes, since the conductive carbon black is included in the binder 104. In Fig. 4 only for some of the graphite particles 102 and binder particles 104 reference sings are indicated.

Fig. 5 shows a scanning electrode microscopy of the electrode of Example 5; the conductive base material thereof consists of aluminum fibers being sintered to one another to form a conductive network. In the micrographic image the metal fiber 100 can be recognized as the smooth grey area at the left part of the micrograph. The binder 104 can be recognized as white flakes, since the conductive carbon black is included in the binder 104. The electrode active material NCA 106 can be recognized as light gray spherical particles. The graphite particles 102 can be recognized also as dark plates. In Fig. 5 only for some of the graphite particles 102, binder particles 104 and NCA particles 106 reference sings are indicated.

In the following, the present invention will be further described by Examples.

For Examples 1 and 2 networks of copper fibers were used as conductive base material. For Examples 3 to 5 networks of aluminum fibers were used as conductive base material. The networks of metal fibers can be obtained as described in WO 2020/016240 A1.

The coating compositions for the preparation of electrodes from these networks of metal fibers were obtained by providing the components indicated in Table 1 in powder form and mixing them thoroughly in a mortar. The additive 1 is included in the binder. The coating compositions were dry, i.e. essentially free of water and other solvents, and in the form of free-flowing powders. The compositions indicated in table 1 are suitable for coating 2D-electrodes, i.e. metallic foils, and 3D-electrodes, i.e. a porous conductive base material, for example in the form of a network of metal fibers. Using the same coating composition for both types of conductive base material allows a better comparability. Nevertheless, it is possible to use much lower amounts of binder and additives, or even none at all, for 3D-electrodes.

**Table 1**

| Example | Active Electrode Material | Binder | Additive 1 | Additive 2 |
|---|---|---|---|---|
| 1 | Graphite (85) | PVDF (10) | Super-P (5) | |
| 2 | Graphite (92.5) | PVDF (5) | Super-P (2.5) | |
| 3 | LTO (87) | PVDF (7) | Super-P (4) | Graphite (2) |
| 4 | NMC622 (87) | PVDF (7) | Super-P (4) | Graphite (2) |
| 5 | NCA (87) | PVDF (7) | Super-P (4) | Graphite (2) |

In table 1 values in parentheses indicate %-by weight, based on 100 % by weight of the total coating composition. Graphite is graphite powder, <20 µm, synthetic (SigmaAldrich (Art. Nr. 282863)), which is a calcined graphite. PVDF is poly(vinylidene fluoride) (AlfaAesar (Art. Nr. 44080)). Super-P is conductive carbon black (Alfa Aesar, Art. Nr. H30253)). LTO is lithium titanate (Targray (Art. Nr. SLTO102)), NMC622 is lithium nickel manganese cobalt oxide (Targray (Art. Nr. SNMC03006)) and NCA is lithium nickel cobalt aluminum oxide (MTI Corp. (Art. Nr. Lib-LNCA810)).

The conductive base material was placed on a siliconized paper as support, to prevent the coating compositions in the form of free-flowing powders to flow through the conductive base material. For each example, the corresponding coating composition indicated in table 1 was strayed onto the corresponding conductive base material. Thereafter supernatant coating composition was removed by a doctor blade. Samples of the coated conductive base material were then subjected to two different types of heat treatment indicated below.

### First Type of heat treatment:

Samples for each of Examples 1 to 5 were heated in a furnace to 170 °C for a time of 60 min. After cooling to room temperature, the samples were compressed by calendaring, reducing their thickness by around 50 %. Thicknesses of the samples after compression by calendaring were in the range of 150 µm to 200 µm.

### Second Type of heat treatment:

Samples for each of Examples 1 to 5 were subjected to hot calendaring, with the temperature of the calendar rolls being set to 160 °C and a speed of 5 m/min. During calendaring, compression of the samples by 50 % was achieved, such that the thicknesses of the samples after compression by calendaring were in the range of 150 µm to 200 µm.

After heat treatment, discs of 14 mm diameter were punched out of the samples. While both types of heat treatment were successful for preparing electrodes, it was noted that the second type of heat treatment (hot calendaring) provided a better adhesion of the electrode active material to the conductive base material. During punching out the discs, only insignificant amounts of the electrode active material were lost. In contrast, when applying the first type of heat treatment (heating without compression, followed by compression at room temperature), the loss of electrode active material during punching out the disks was observable at the edges of the punched out discs, but no active material was lost in the center of the discs, i.e. also here acceptable electrodes were obtained. The 14 mm discs were tested against metallic lithium in a coin battery.

As Comparative Example 1, the network of metal fibers used for Example 1 as conductive base material was also coated by a typical wet coating process. For the wet coating process, the coating compositions used for Examples 1 to 5) were dispersed in acetone. Electrodes were prepared, as described in WO 2020/016240 A1.

The electrodes of Example 1 and Comparative Example 1 showed comparable performance in view of capacity and cycling behavior, as shown by the measurements depicted in Fig. 2 and 3. Also, in view of mechanical stability, the performance of these electrodes was comparable, especially when applying the second type of heat treatment (hot calendaring). Nevertheless, the electrodes of Example 1 could be prepared using a solvent free dry coating, i.e. no solvents that are harmful to health and/or the environment are required for preparing the electrodes of Example 1. Further, since the electrodes of the present invention are prepared using dry coating, no evaporation of solvent is necessary, so that it is possible to obtain higher volumetric loadings of the electrodes, since no channels and bubbles resulting from evaporation of solvent exist.

Electrodes of Examples 1 to 5 showed also the improved stability compared to two-dimensional electrodes that was observed for the three-dimensional electrodes disclosed in WO 2020/016240 A1. Accordingly, when folding the electrodes of Examples 1 to 5 (90° to one side, 180 ° to the other side and then back to the original position), only 1 to 3 % by weight of the electrode active material were lost. The loss observed for Example 1 was not increased when lowering the amount of binder, as in Examples 2. Also the electrodes of Examples 3 to 5 show a comparably low loss of active material when subjected to folding. In contrast, subjecting a two-dimensional electrode (copper or aluminum foil as conductive base material) to the same folding, the electrode active material is delaminated from the conductive base material and the electrode loses its functionality.

### List of reference signs:

- 1: Electrode
- 10: Conductive base material
- 12: Coating Composition
- 14: Coated conductive base material
- 16: Supernatant
- 18: Doctor blade
- 20: Calendar rolls
- 100: Metal fiber
- 102: Graphite particles
- 104: Binder
- 106: NMC particles

## Claims

1. Method of producing an electrode (1), comprising the following steps:
Step (A) of providing a conductive base material (10),
Step (B) of providing a coating composition (12) comprising an electrode active material and optionally a binder (104), wherein the coating composition (12) is a free-flowing powder,
Step (C) of coating the conductive base material (10) provided in step (A) with the coating composition (12) provided in Step (B), and
Step (D) of heating the coated conductive base material (14) obtained in step (C) and optionally compressing the coated conductive base material (14), e.g. by calendering.

2. Method according to claim 1,
wherein the conductive base material (10) is a porous conductive base material.

3. Method according to one of the preceding claims,
wherein the conductive base material (10) comprises a plurality of metal fibers (100), forming a network of metal fibers (100).

4. Method according to claim 3,
wherein the metal fibers (100) are in direct contact with one another.

5. Method according to one of the preceding claims,
wherein the conductive base material (10) has a thickness of 200 µm or greater, more preferably of 500 µm or greater, furthermore preferably of 550 µm or greater, even more preferably of 600 µm or greater and even further more preferably of 750 µm or greater, even further more preferably 1000 µm or greater, even further more preferably 1500 µm or greater, even further more preferably 3000 µm or greater and most preferably 5000 µm or greater.

6. Method according to one of the preceding claims,
wherein the step (B) of providing a coating composition (12) comprises mixing the electrode active material, a polymeric binder (104) and, optionally carbon black, to obtain the coating composition as a free-flowing powder.

7. Method according to one of the preceding claims,
wherein the electrode active material comprises calcined graphite (102), in particular calcined graphite (102) being essentially free of surface hydroxide groups.

8. Method according to one of the preceding claims,
wherein Step (D) further comprises compressing the coated conductive base material (14).

9. Method according to claim 8,
wherein in Step (D) the coated conductive base material (14) is subjected to hot compression, in particular calendaring,
wherein the heating is (i) a heating set to be above the Tg of the binder but below the Tm of the binder, in particular the heating is set to a temperature in the range of at most 50 °C, more preferably at most 30 °C, even more preferably at most 20 °C, below the Tm of the binder, and/or
wherein the heating is (ii) a heating set to be above the Tg of the binder but below the Tz of the binder, in particular the heating is set to a temperature of at least 10 °C above the Tg, more preferably at least 20 °C above the Tg and even more preferably at least 30 °C above the Tg. but below Tz.

10. Electrode (1), comprising a coated conductive base material (14) being dry coated with a coating composition (12) comprising an electrode active material and a polymeric binder.

11. Electrode (1) according to claim 10, being obtainable according to the method of one of claims 1 to 9.

12. Dry coating composition (12) for preparing an electrode (1) according to claim 10 or 11 and/or for being used in the method according to one of claims 1 to 9, comprising an electrode active material and a polymeric binder (104), wherein the dry coating composition (12) is a free-flowing powder.

13. Dry coating composition (12) according to claim 12, wherein in the dry coating composition (12) the content of conductivity enhancing additives is equal to or less than 10 % by weight, in particular equal to or less than 8 % or equal to or less than 6 % by weight, based on the total weight of the dry coating composition.

14. Battery, comprising an electrode (1) according to claim 10 or 11.

15. Electric circuit, comprising a battery according to claim 14.
